(19) Europäisches Patentamt

European Patent Office

Office européen des brevets

(11) **EP 1 327 939 A2**

(12) **EUROPEAN PATENT APPLICATION**

(43) Date of publication:
**16.07.2003  Bulletin 2003/29**

(51) Int Cl.7: **G06F 13/364**, G06F 13/37

(21) Application number: **03250223.9**

(22) Date of filing: **14.01.2003**

| | |
|---|---|
| (84) Designated Contracting States: **AT BE BG CH CY CZ DE DK EE ES FI FR GB GR HU IE IT LI LU MC NL PT SE SI SK TR** Designated Extension States: **AL LT LV MK RO** | (72) Inventor: **Hong, Jin-seok** **Suwon-si, Gyeonggi-do (KR)** |
| (30) Priority: **15.01.2002  KR 2002002264** | (74) Representative: **Geary, Stuart Lloyd et al** **Venner, Shipley & Co., 20 Little Britain London EC1A 7DH (GB)** |
| (71) Applicant: **SAMSUNG ELECTRONICS CO., LTD. Suwon-City, Kyungki-do (KR)** | |

(54) **Ring bus system**

(57)    A bus system and a method of deciding a data transmission path are provided. The bus system includes a plurality of functional blocks (2), a ring bus, an arbiter (3) which generates a bus grant signal according to a predetermined algorithm in response to a bus request from one of the functional blocks (2) and a plurality of bus connectors (1, 5, 6) each of which connects a corresponding functional block (2) to the ring bus, transmits data from the corresponding functional block (2) to the ring bus, and transmits data from the ring bus to the corresponding functional block (2).

EP 1 327 939 A2

**Description**

The present invention relates to data processing system comprising a plurality of circuits, a ring bus having plurality of nodes connected to respective ones of said circuits and an arbiter for granting access to the bus to said circuits in response to access requests therefrom.

Buses are typically shared transmission paths linking electronic modules or integrated circuits, e.g. between a CPU and memory chips. However, due to advances in semiconductor manufacturing technology, the development and use of system-on-chip technology, in which the majority of the functional blocks of a system, such as a microcomputer, are implemented on a single chip, is increasing.

Bus systems developed for interconnecting integrated circuits are being applied to system-on-chip systems without modification. Since such system-on-chip systems have low inductance L, resistance R and capacitance C high-speed systems can be made using conventional bus designs in system-on-chip systems.

Integrated circuits formed using very deep sub-micron (VDSM) and ultra deep sub-micron (UDSM) technologies have very narrow interconnection wires, the time taken for a signal to pass through the functional blocks of the circuits is reduced. However, a wire delay that has been ignored in the past becomes more important than a cell delay and it is difficult to predict the influence which the wire delay exerts on system performance at an early stage of a design. Accordingly, when a conventional bus system, designed without an in-depth consideration of wire delay, is applied to a system-on-chip system, the system performance may be less that optimal.

According to an aspect of the present invention, there is provided a bus system including a plurality of functional blocks; a ring bus which transmits data in a single direction; an arbiter which generates a bus grant signal according to a predetermined algorithm in response to a bus request from one of the functional blocks; and a plurality of bus connectors each of which connects a corresponding functional block to the ring bus, transmits data from the corresponding functional block to the ring bus, and transmits data from the ring bus to the corresponding functional block.

Preferably, each of the bus connectors includes a multiplexer, which receives data from the ring bus and data from a corresponding functional block and outputs one of the received data to the ring bus in response to a control signal received from the arbiter, and the arbiter receives a bus request from one of the functional blocks and sends the bus grant to the corresponding functional block through a path which is separate from the ring bus.

According to another aspect of the present invention, there is provided a bus system including a ring bus; a plurality of functional blocks which are connected to the ring bus and transmit and receive data through the ring bus; and at least one short-cut bus which is separate from the ring bus and transmits data from one of the functional blocks to another functional block.

Preferably, the ring bus and short-cut bus transmit data in a single direction.

Preferably, the functional blocks includes a first functional block comprising an incoming path and an outgoing path which are connected to the ring bus; a second functional block which comprises an incoming path connected to the ring bus and outgoing paths respectively connected to the ring bus and the short-cut bus and outputs data from the ring bus to the short-cut bus or the ring bus; and a third functional block which comprises incoming paths respectively connected to the ring bus and the short-cut bus and an outgoing path connected to the ring bus and outputs data from the ring bus or data from the short-cut bus to the ring bus.

According to still another aspect of the present invention, there is provided a bus system including a plurality of functional blocks; a ring bus comprising a plurality of nodes; at least one short-cut bus which directly connects one node of the ring bus to another node of the ring bus; a first bus connector which connects a functional block to a node of the ring bus; and a second bus connector which connects a functional block to a node connected to the short-cut bus.

Preferably, the bus system also includes an arbiter which generates a bus grant signal according to a predetermined algorithm in response to a bus request from one of the functional blocks. Each of the first and second bus connectors outputs data from the corresponding functional block to the ring bus or the short-cut bus in response to the bus grant signal received from the arbiter.

Preferably, the second bus connector includes a fan-out connector comprising an incoming path connected to the ring bus and outgoing paths respectively connected to the ring bus and the short-cut bus, and a merge connector comprising incoming paths respectively connected to the ring bus and the short-cut bus and an outgoing path connected to the ring bus.

The fan-out connector outputs received data to one of the ring bus and the short-cut bus, in response to a control signal received from the arbiter. The merge connector receives data from one of the ring bus and the short-cut bus and outputs the data to the ring bus, in response to a control signal received from the arbiter.

The arbiter receives a bus request from each of the functional blocks and sends the bus grant signal to the corresponding functional block through a path which is separately formed from the ring bus and the short-cut bus.

There is also provided a system-on-chip on which one of the bus systems provided above is laid out.

According to still another aspect of the present invention, there is provided a method of selecting a path through which data is transmitted from one functional block to another functional block in a bus system including a plurality of functional blocks, a ring bus including a plurality of nodes, at least one short-cut bus which directly connects one node of the ring bus to another node of the ring bus, a first bus connector which connects a functional block to a node of the ring bus, and a second bus connector which connects a functional block to a node connected to the short-cut bus. The method includes (a) synthesizing the bus system; (b) laying out the bus system; (c) simulating a case where the short-cut bus is used when data is transmitted from each of the functional blocks to another functional block and a case where the short-cut bus is not used and selecting one case based on the result of simulation; and (d) loading a bus selection table, which is obtained in step (c) to be referred to for selection of a bus, into the arbiter.

In one aspect, a data processing system according to the present invention is characterised in that each node includes multiplexer means having first and second data inputs connected to receive data from an immediately preceding node of the ring bus and the associated circuit respectively, an output for transmitting data to an immediately succeeding node and a control input connected to receive a control signal from the arbiter, and the arbiter is responsive to a request for bus access by placing the control signal to the multiplexer means of the node, associated with the source of the request, in a GRANT state which causes said multiplexer means to select its second input.

Preferably, the ring bus is a chordal ring bus. More preferably, a first node includes demultiplexer means for selectively routing data over a shortcut link and a second node (6) includes multiplexer means for selectively outputting data from said shortcut link to an immediately succeeding node, said demultiplexer and multiplexer means having control inputs connected to the arbitrator. More preferably, the arbitrator (3) includes a table indicating whether said shortcut is to be used for the various possible node (1, 5, 6) to node (1, 5, 6) transmissions and outputs control signals (SELECT) to the demultiplexer means (51) of said first node (5) and the multiplexer means (61) of the second node (6) in dependence on said table in response to an access request (REQUEST) from a circuit (2).

The ring bus may be unidirectional.

The invention may be employed in an integrated circuit.

Embodiments of the present invention will now be described, by way of example, with reference to the accompanying drawings, in which:

Figure 1 is a block diagram of a first bus system according to the present invention;
Figures 2 through 4 are diagrams showing details of the bus system shown in Figure 1;
Figures 5 through 7 are diagrams of second, third and fourth bus systems according to the present invention;
Figure 8 is another diagram of the bus system shown in Figure 5;
Figure 9 is a diagram of an detail of the bus system shown in Figure 8;
Figures 10A and 10B are detailed circuit diagrams of a fan-out connector shown in Figure 9;
Figures 11A and 11B are detailed circuit diagrams of a merge connector shown in Figure 9;
Figure 12 is a block diagram for explaining an arbiter of Figure 9;
Figures 13A and 13B are diagrams showing an example in which a short-cut bus is operated; and
Figure 14 is a diagram of a method of generating a bus selection table for an arbiter.

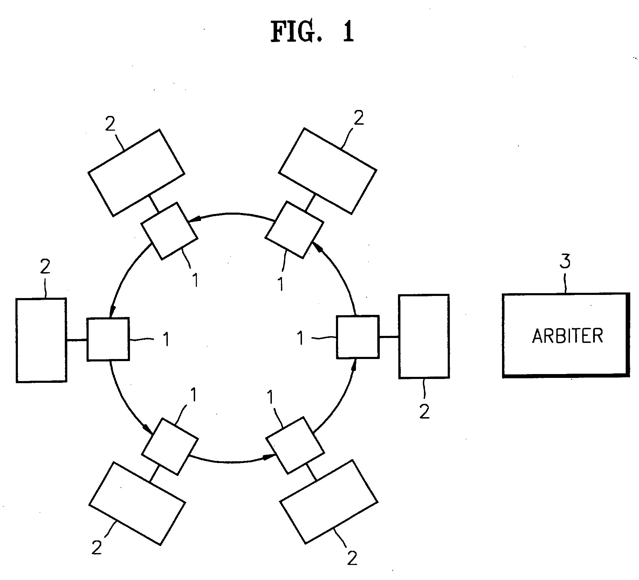

Referring to Figure 1, a bus system includes a ring bus in which data is transmitted in a single direction. A plurality of nodes are provided on the ring bus and functional blocks 2 are physically connected to the ring bus via corresponding bus connectors 1 at the respective nodes. The bus connectors 1 receive or pass data, which has been transmitted by other nodes, on the ring bus and transmit data from their corresponding functional blocks 2 over the bus in response to control signals from an arbiter 3. The arbiter 3 is physically connected to each of the functional blocks 2 by a signal path separate from the ring bus and generates bus grant signals according to a predetermined algorithm in response to bus requests from the functional blocks 2. The arbiter 3 arbitrates bus requests so that the plurality of functional blocks 2 can share the ring bus. The arbiter 3 employs a conventional algorithm such as a priority arbitration method, a first-in first-served (FIFS) method, a daisy-chain method, a round-robin method or algorithms to be developed in the future.

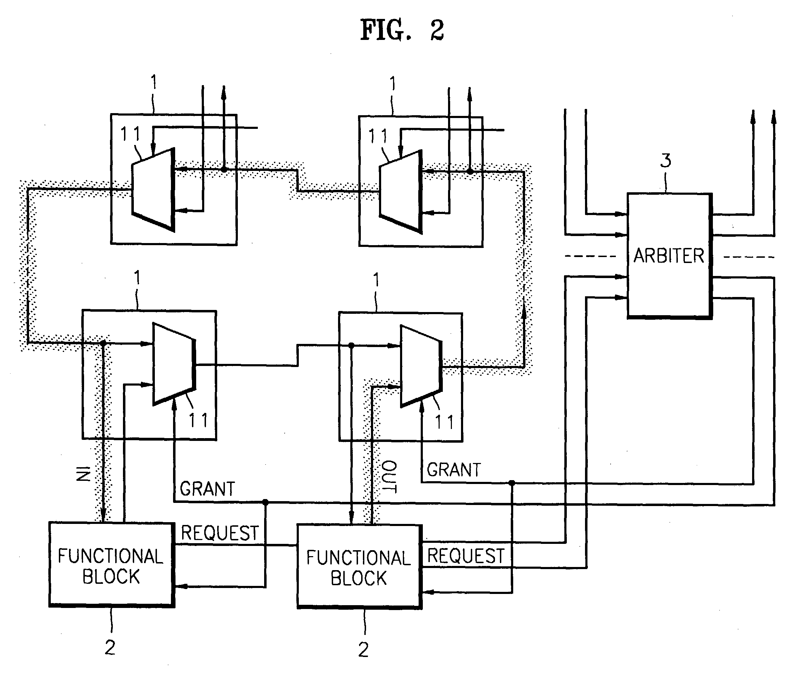

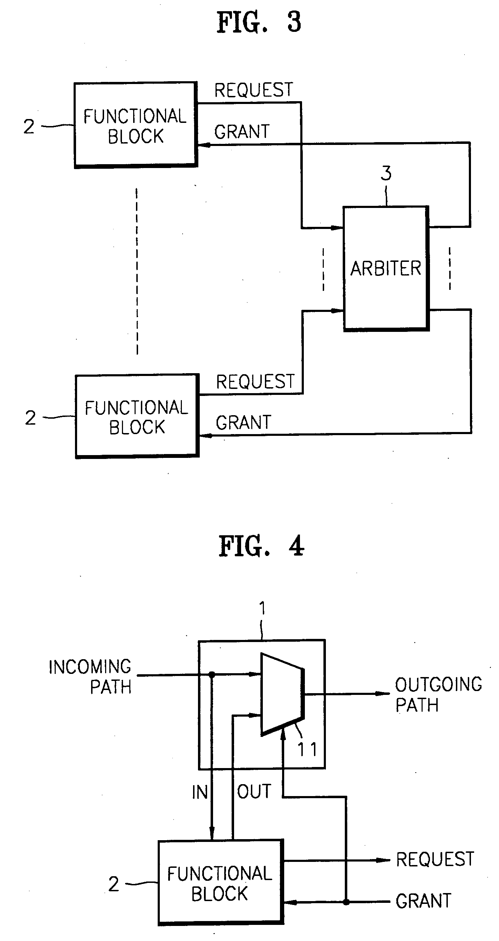

Referring to Figures 2 and 3, each of the functional blocks 2 is connected to the arbiter 3 through a physically separate path from a ring bus. When there is data to be transmitted, a functional block 2 sends a bus request signal REQUEST to the arbiter 3. Then, the arbiter 3 sends a bus grant signal GRANT to the corresponding functional block 2 according to a predetermined algorithm.

Referring to Figures 2 and 4, a bus connector 1 includes an incoming path and an outgoing path which are connected to the ring bus. In addition, the bus connector 1 is connected to a corresponding functional block 2 and transmits data to the functional block 2 or receives data from the functional block 2. Each of the bus connectors 1 includes a multiplexer 11 which outputs either data from the ring bus or data from the functional block 2. The multiplexer 11 outputs data received from the functional block 2 to the outgoing path in response to a bus grant signal GRANT received from the arbiter 3. If data is input from the incoming path, connected to the ring bus, to the multiplexer 11 in the state where a bus grant signal GRANT is not being input to the multiplexer 11, the multiplexer 11 outputs the data from the incoming path to the outgoing path.

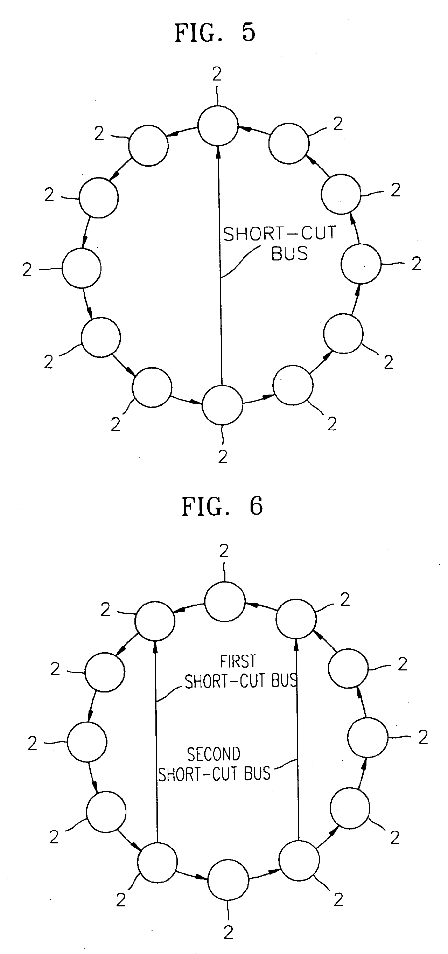

In Figures 5 through 7, the same reference numerals as in Figure 1 denote the same elements as in Figure 1 and description thereof will be omitted.

Referring to Figure 5, a bus system includes as a common bus a ring bus of a circular structure in which data is transmitted in a single direction. A plurality of functional blocks 2 are physically connected to the ring bus. A separate short-cut bus is provided across the ring bus. The short-cut bus starts from a node connected to one functional block 2 and ends at a node connected to another functional block 2. The short-cut bus is provided for compensating for performance degradation arising from a cell delay due to the functional blocks 2 being arranged in series. The system designer will decide which nodes to put the short-cut bus between depending on the anticipated bus traffic patterns. A simulation may be used for determining where to put the short-cut bus.

The functional blocks 2 transmit data through the short-cut bus and/or the ring bus. A variety of methods can be used to allow the functional blocks 2 to share the bus, such as an arbitration method through an arbiter, as shown in Figure 1, a method of using tokens indicating the right to use the bus in regular order, or an Ethernet method.

Referring to Figure 6, a bus system includes as a ring bus, in which data is transmitted in a single direction. A plurality of functional blocks 2 are physically connected to the ring bus. Separate short-cut buses are formed across the ring bus. First and second short-cut buses extend between respective pairs of functional blocks 2. The functional blocks 2 transmit data through at least one of the short-cut buses and the ring bus. As described above, a variety of methods can be used to allow the functional blocks 2 to share the buses.

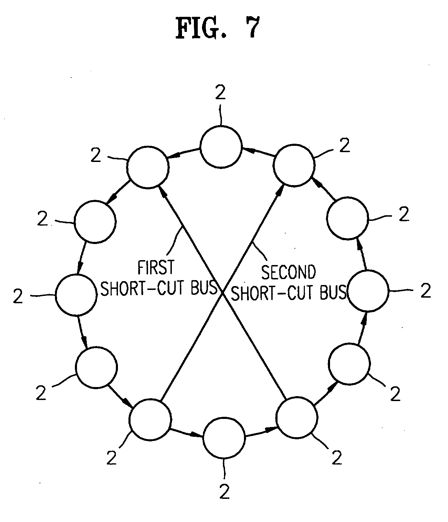

Referring to Figure 7, a bus system includes as a ring bus, in which data is transmitted in a single direction. A plurality of functional blocks 2 are physically connected to the ring bus. First and second short-cut buses extend between respective pairs of functional blocks 2. In Figure 7, although the first and second short-cut buses look like they are connected, they are electrically isolated since they are formed in different layers in a system-on-chip integrated circuit having a multilayer structure. The functional blocks 2 transmit data through at least one among the first and second short-cut buses and the ring bus. As described above, a variety of methods can be used to allow the functional blocks 2 to share the bus.

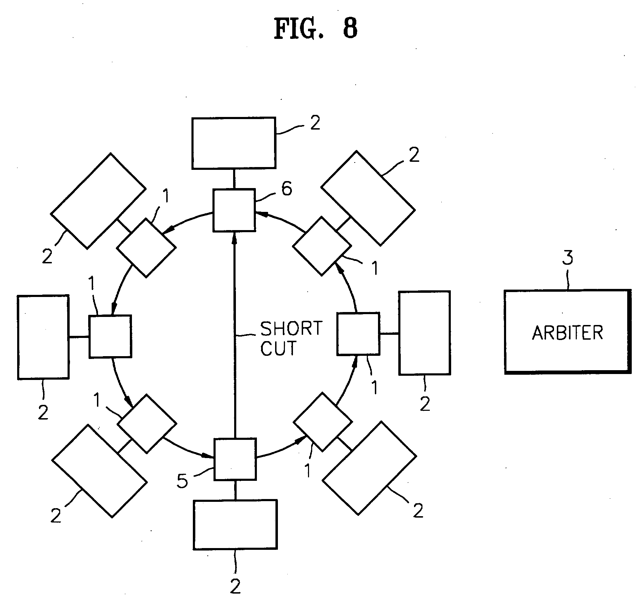

In Figures 8, the same reference numerals as in Figures 5 and 8 denote the same elements and description thereof will be omitted.

Referring to Figure 8, the bus system includes a ring bus, in which data is transmitted in a single direction and a short-cut bus. The bus system also includes a plurality of functional blocks 2. Each of the functional blocks 2 is physically connected to the ring bus and, in two cases, the short-cut bus using one of first, second and third types of bus connectors 1, 5, 6. The first bus connector type 1 has an incoming path and an outgoing path, which are connected to the ring bus, and connects a corresponding functional block 2 to the ring bus. The second bus connector type 5 is a fan-out connector having an incoming path connected to the ring bus and two outgoing paths, one connected to the short-cut bus and the other connected to the ring bus. The third bus connector type 6 is a merge connector having two incoming paths, one connected to the ring bus and the other connected to the short-cut bus, and one outgoing path connected to the ring bus.

An arbiter 3 is connected to each of the functional blocks 2 through a physically separate path from the ring bus and outputs bus grant signals GRANT according to a predetermined algorithm in response to bus access requests from the functional blocks 2. The arbiter 3 allows the plurality of functional blocks 2 to share the ring bus. The arbiter 3 employs a conventional algorithm such as a priority arbitration method, a FIFS method, a daisy-chain method, a round-robin method or an algorithm to be developed in the future. In addition, the arbiter 3 sends control signals to the second and third type connectors 5, 6 to report whether the short-cut bus is to be used for a data transmission.

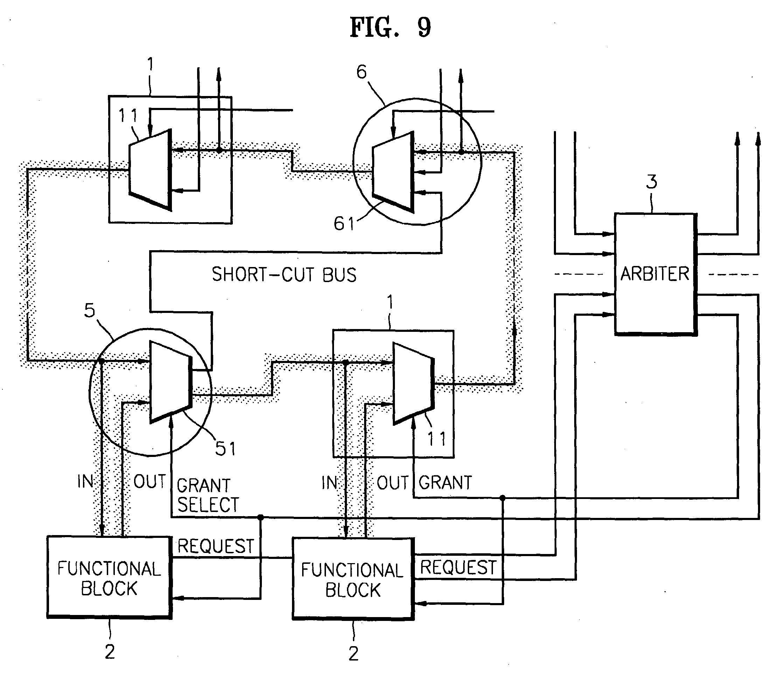

In Figures 8 and 9, the same reference numerals denote blocks having the same functions, and further description thereof will be omitted.

Referring to Figure 9, each of the functional blocks 2 is connected to an arbiter 3 through a physically separate path from the ring bus. Each of the functional blocks 2 sends a bus request signal REQUEST to the arbiter 3 when there is data to be transmitted. Then, the arbiter 3 outputs a bus grant signal GRANT to the requesting functional block 2 and the bus connectors 1, 5, 6 according to a predetermined algorithm. In addition, in the case of fan-out and merge bus connectors 5, 6, the arbiter 3 outputs a selection signal SELECT for selecting one of the short-cut bus and the ring bus.

Each of the first type of bus connector 1 connects a corresponding functional block 2 to the ring bus only and includes a multiplexer 11 which outputs either data received from the ring bus or data received from the functional block 2. The fan-out connectors 5 connect a corresponding functional block 2 to both the ring bus and the short-cut bus and includes a demultiplexer 51 which outputs data received from the ring bus or data received from the corresponding functional block 2 to one of the short-cut bus and the ring bus in response to a selection signal SELECT and/or a bus grant signal GRANT received from the arbiter 3. The merge connector 6 connects a corresponding functional block 2 to both the ring bus and the short-cut bus and includes a multiplexer 61 which outputs data received from the short-cut bus, the ring bus or the corresponding functional block 2 to the ring bus in response to a selection signal SELECT and/or a bus grant signal GRANT received from the arbiter 3.

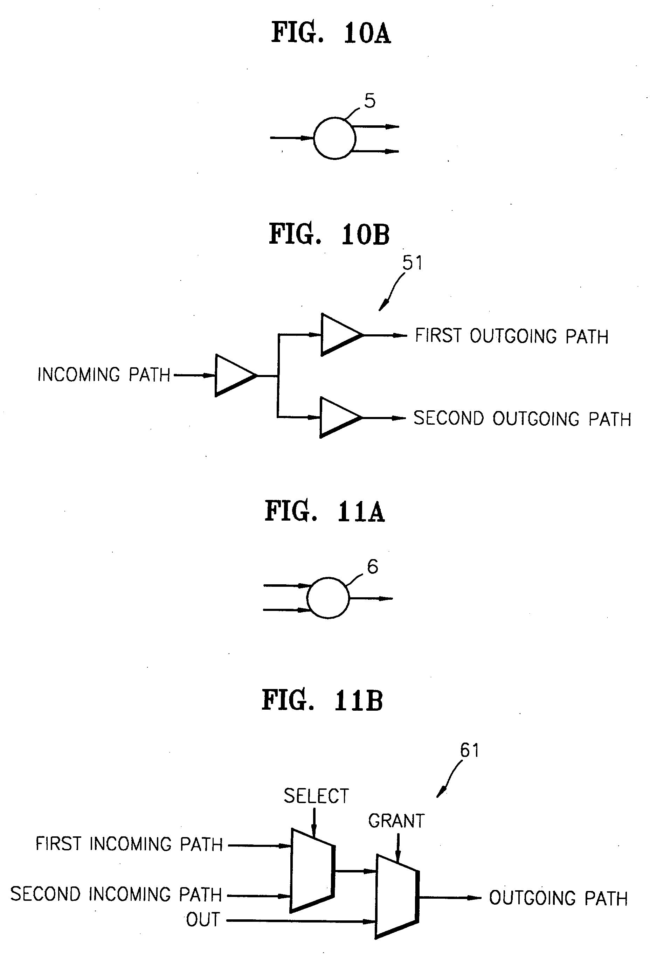

Referring to Figures 10A and 10B, a fan-out connector 5 includes a demultiplexer 51 having one incoming path connected to the ring bus and first and second outgoing paths, one connected to the short-cut bus and the other connected to the ring bus. A selection signal SELECT for selecting one of the two outgoing paths is transmitted from the arbiter 3.

Referring to Figures 11A and 11B, the merge connector 6 includes a multiplexer 61 having first and second incoming paths connected to the ring bus and the short-cut bus respectively, and one outgoing path connected to the ring bus. The multiplexer 61 outputs the data received through the first or second incoming path in response to a selection signal SELECT received from the arbiter 3 and outputs the selected data or data received from the corresponding functional block 2 in response to a bus grant signal GRANT.

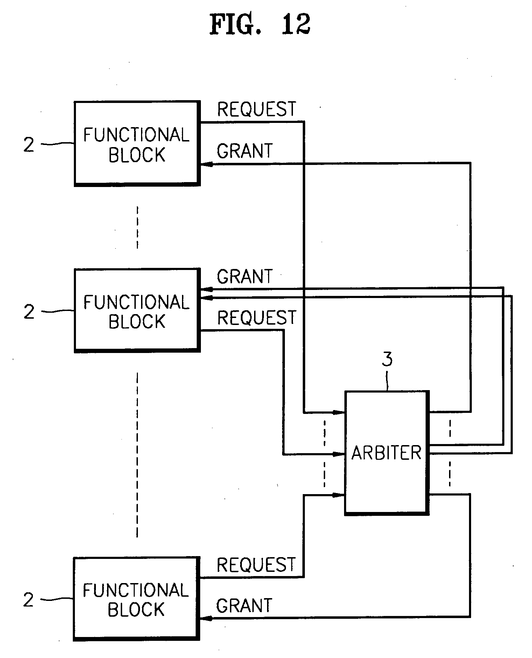

Referring to Figure 12, the arbiter 3 is connected to each of the functional blocks 3 through a path separate from the ring bus and the short-cut bus. After one of the functional blocks 2 sends a bus request signal REQUEST to the arbiter 3, the arbiter 3 sends a bus grant signal GRANT back to it according to a predetermined algorithm.

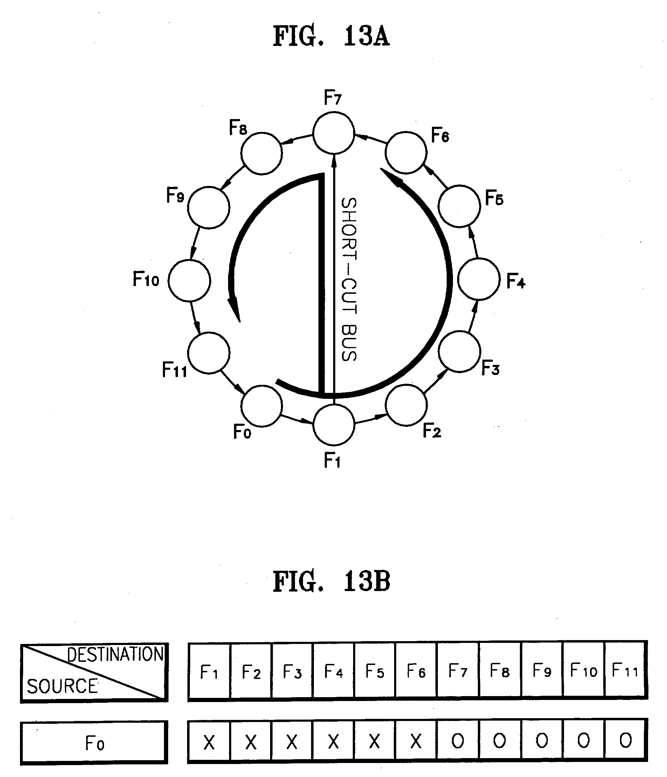

Referring to Figure 13A, 12 functional blocks $F_0$, $F_1$, ..., $F_{11}$ are connected to a ring bus and a short-cut bus is connected from the functional block $F_1$ to the functional block $F_7$. Data is transmitted anticlockwise through the ring bus and the short-cut bus.

Referring to Figure 13B, if it is assumed that data is being transmitted from the functional block $F_0$ to the functional blocks $F_1$, $F_2$, ..., $F_{11}$, use or nonuse of the short-cut bus is indicated by a "O" or a "X", respectively. In the case of the transmission to functional blocks $F_7$, $F_8$, $F_9$, $F_{10}$, and $F_{11}$, it is efficient to transmit the data through the short-cut bus, but it is not in the case of transmission to the functional blocks $F_1$, $F_2$, $F_3$, $F_4$, $F_5$, and $F_6$. Accordingly, it is necessary to select use or non-use of the short-cut bus.

In the present embodiment, the arbiter takes charge of selecting a path. In other words, the arbiter 3 sends a selection signal SELECT, which indicates whether the short-cut bus is to be used or not used, that is, indicates whether to output data to the short-cut bus and whether to received data from the short-cut bus, to the fan-out connector 5 and the merge connector 6. To achieve this, the arbiter 3 is provided with a bus selection table, in which information about a path selected when data is transmitted from each of a plurality of functional blocks 2 to another functional block 2 is recorded, and outputs a selection signal SELECT referring to the bus selection table. In practice, when a bus system according to the present invention is implemented in a system-on-chip system, it is unlikely that the ring bus will be exactly circular. Accordingly, even if it is inferred that data can be transmitted more quickly when a short-cut is used than when the short-cut is not used, it may not be the case in an actual implementation. Therefore, the bus selection data must be made based on the topology of the ring bus that is actually implemented on a chip.

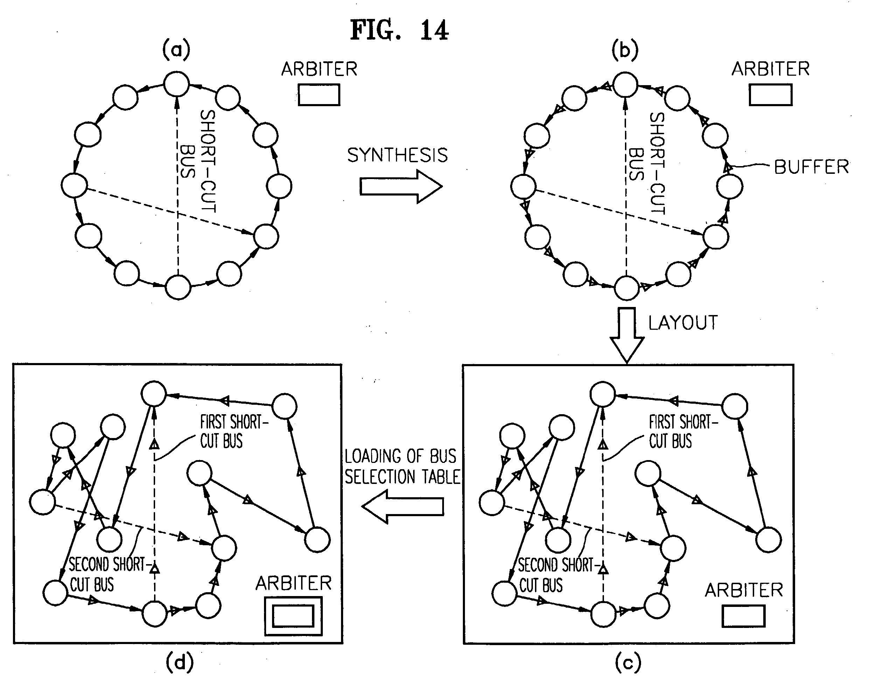

Figure 14 is a diagram of a method of generating a bus selection table for the arbiter 3. The structure of a bus system is logically completed, as shown in Figure 14(a) and is changed into a structure shown in Figure 14(b) through synthesis. Synthesis is performed directly by a circuit designer or using a variety of software tools. A trade-off between a cell delay and a wire delay is performed through synthesis, and a compensation circuit (such as a buffer) for compensating for a delay is added. After synthesis is completed, the bus system is laid out on a chip, as shown in Figure 14(c). Figure 14(c) shows the bus system that is actually laid out on a chip. As shown in Figure 14(c), the ring bus may not have a circular shape when it is laid out on the chip. Accordingly, a bus selection table is made based on time information obtained by surveying the bus system laid out on the chip. The time required for transmitting data from one functional block to another functional block through a path which passes through a short-cut bus and a time required for transmitting the data from the former functional block to the latter functional block through a path which does not pass through a short-cut bus are experimentally measured or measured using a simulation, and information for selecting the path having the lowest transmission delay is recorded in the bus selection table. In other words, information about whether a short-cut bus is used or not when data is transmitted from a functional block to another functional block is recorded in the bus selection table. The completed bus selection table is loaded into the arbiter 3. As described above, the bus selection table can be generated without influencing other logic employed in the bus system and can be loaded into the arbiter 3. Thus, the arbiter 3 sends a selection signal SELECT to the fan-out connector 5 referring to the bus selection table in order to instruct to select one of the short-cut bus and the ring bus.

In order to examine whether the performance of a bus system having a ring bus according to the present invention is improved as compared to a conventional bus system, a transmission delay of a bus system employing a structure (tri-state method) in which each of plurality of functional blocks is connected to a conventional linear-type common bus and a transmission delay of a bus system according to the present invention will be theoretically calculated. The transmission delay of a bus system according to the present invention is expressed by Formula (1), and the transmission delay of a convention bus system is expressed by Formula (2).

$$\text{Delay (proposed)} = K_p * \{(R_0 * C_0 + DC_0) + \cdots + (R_{n-1} * C_{n-1} + DC_{n-1})\} \tag{1}$$

Here, $K_p$ indicates a constant, $R_i$ ($0 \leq i \leq n$-1) indicates resistance of a functional block $i$ ($0 \leq i \leq n$-1), $C_i$ ($0 \leq i \leq n$-1) indicates capacitance, and $DC_i$ ($0 \leq i \leq n$-1) indicates a delay due to a cell such as a multiplexer within a connector. For simplification, it is assumed that $R_0$ through $R_{n-1}$, $C_0$ through $C_{n-1}$, and $DC_0$ through $DC_{n-1}$ are all the same.

$$\text{Delay (conventional)} = K_{c0} * 1 * 2 * R_0 * C_0 + \cdots + K_{c(n-1)} * n * (n-1) * R_{n-1} * C_{n-1} \tag{2}$$

Here, $K_{ci}$ indicates a constant, $R_i$ ($0 \leq i \leq n$-1) indicates resistance of a functional block $i$ ($0 \leq i \leq n$-1), $C_i$ ($0 \leq i \leq n$-1) indicates capacitance, and $n$ indicates the number of functional blocks.

Formulas (1) and (2) are simplified into Formulas (3) and (4). Resistance $R$ and capacitance $C$ in a method according to the present invention are probably different than those in a conventional method, but it is assumed that they are similar for simplification of analysis.

$$\text{Delay (proposed)} = K_p * n * (R * C + DC) \tag{3}$$

$$\text{Delay (conventional)} = K_c * n * (n + 1) * R * C \tag{4}$$

Subtraction of Formula (3) from Formula (4) is expressed by Formula (5).

Delay (conventional) - Delay (proposed)

$$= (K_c - K_p) * n * R * C + \{K_c * (n+1) * R * C - K_p * DC\} * n \qquad \ldots(5)$$
$$= \{K_c * (n+1) * R * C - K_p * DC\} * n$$

Here, an improvement ratio is defined by Formula (6).

$$\text{Improvement Ratio} = K_c * (n+1) * R * C / K_p * DC$$
$$\approx K_i * (n+1) * (R * C / DC) \qquad \ldots(6)$$

Accordingly, when the improvement ratio exceeds 1, it can be concluded that the bus system according to the present invention has better performance than the conventional bus system. As line widths decrease due to the development of micro processing technology, wire delays become as important as cell delays. Accordingly, as the improvement ratio increases, the efficiency of a bus system according to the present invention also increases.

However, since a cell delay increases as the number of functional blocks increases, a short-cut bus is used in order to increase efficiency when the break-even point is exceeded or when a high-speed system is to be realized.

In the above embodiments, one or two short-cut buses are used, but the number of short-cut buses can be increased according to the number of functional blocks included in a bus system. When the number of short-cut buses becomes very large, a bus system according to the present invention has the same structure as a point-to-point bus system, so it is difficult to produce the effect of the present invention.

Each of the bus systems according to all of the above-described embodiments can be implemented as a system-on-chip.

In a conventional tri-state bus structure, the total wire length is short but transmission speed is slow, simultaneous transmission is impossible, the likelihood of transmission collision rapidly increases as the number of functional blocks increases, and it is complicated to test the efficiency of a completed system. Meanwhile, in a conventional point-to-point bus structure, transmission speed is fast and simultaneous transmission is possible, but the total wire length is long and rapidly increases as the number of functional blocks increases, which makes debugging difficult.

In contrast, the present invention combines the advantages of the conventional tri-state bus and point-to-point bus, thereby providing a bus system having a ring bus structure which can be easily laid out and has improved efficiency. In particular, the present invention employs a short-cut bus to improve a wire delay, thereby providing a bus system increasingly suitable for a system-on-chip.

**Claims**

1. A bus system comprising:

   a plurality of functional blocks;
   a ring bus which transmits data in a single direction;
   an arbiter which generates a bus grant signal according to a predetermined algorithm in response to a bus request from one of the functional blocks; and
   a plurality of bus connectors each of which connects a corresponding functional block to the ring bus, transmits data from the corresponding functional block to the ring bus, and transmits data from the ring bus to the corresponding functional block.

2. The bus system of claim 1, wherein each of the bus connectors comprises a multiplexer which receives data from the ring bus and data from a corresponding functional block and outputs one of the received data to the ring bus in response to a control signal received from the arbiter.

3. The bus system of claim 1, wherein the arbiter receives a bus request from one of the functional blocks and sends the bus grant to the corresponding functional block through a path which is separate from the ring bus.

4. A bus system comprising:

   a ring bus;
   a plurality of functional blocks which are connected to the ring bus and transmit and receive data through the ring bus; and
   at least one short-cut bus which is separate from the ring bus and transmits data from one of the functional blocks to another functional block.

5. The bus system of claim 4, wherein the ring bus and short-cut bus transmit data in a single direction.

6. The bus system of claim 5, wherein the functional blocks comprise:

   a first functional block comprising an incoming path and an outgoing path which are connected to the ring bus;
   a second functional block which comprises an incoming path connected to the ring bus and outgoing paths respectively connected to the ring bus and the short-cut bus and outputs data from the ring bus to the short-cut bus or the ring bus; and
   a third functional block which comprises incoming paths respectively connected to the ring bus and the short-cut bus and an outgoing path connected to the ring bus and outputs data from the ring bus or data from the short-cut bus to the ring bus.

7. A bus system comprising:

   a plurality of functional blocks;
   a ring bus comprising a plurality of nodes;
   at least one short-cut bus which directly connects one node of the ring bus to another node of the ring bus;
   a first bus connector which connects a functional block to a node of the ring bus; and
   a second bus connector which connects a functional block to a node connected to the short-cut bus.

8. The bus system of claim 7, wherein the ring bus and short-cut bus transmit data in a single direction.

9. The bus system of claim 8, further comprising an arbiter which generates a bus grant signal according to a predetermined algorithm in response to a bus request from one of the functional blocks,
   wherein each of the first and second bus connectors outputs data from the corresponding functional block to the ring bus or the short-cut bus in response to the bus grant signal received from the arbiter.

10. The bus system of claim 9, wherein the second bus connector comprises:

a fan-out connector comprising an incoming path connected to the ring bus and outgoing paths respectively connected to the ring bus and the short-cut bus; and

a merge connector comprising incoming paths respectively connected to the ring bus and the short-cut bus and an outgoing path connected to the ring bus.

11. The bus system of claim 10, wherein the fan-out connector outputs received data to one of the ring bus and the short-cut bus, in response to a control signal received from the arbiter.

12. The bus system of claim 11, wherein the merge connector receives data from one of the ring bus and the short-cut bus and outputs the data to the ring bus, in response to a control signal received from the arbiter.

13. The bus system of claim 9, wherein the arbiter receives a bus request from each of the functional blocks and sends the bus grant signal to the corresponding functional block through a path which is separately formed from the ring bus and the short-cut bus.

14. A system-on-chip on which a bus system is laid out, the bus system comprising:

a plurality of functional blocks;
a ring bus comprising a plurality of nodes;
at least one short-cut bus which directly connects one node of the ring bus to another node thereof;
a first bus connector which connects a functional block to a node of the ring bus; and
a second bus connector which connects a functional block to a node connected to the short-cut bus.

15. The system-on-chip of claim 14, wherein the ring bus and short-cut bus transmit data in a single direction.

16. The system-on-chip of claim 14, wherein the bus system further comprises an arbiter which generates a bus grant signal according to a predetermined algorithm in response to a bus request from one of the functional blocks, and each of the first and second bus connectors outputs data from the corresponding functional block to the ring bus or the short-cut bus in response to the bus grant signal received from the arbiter.

17. The system-on-chip of claim 16, wherein the second bus connector comprises:

a fan-out connector comprising an incoming path connected to the ring bus and outgoing paths respectively connected to the ring bus and the short-cut bus; and

a merge connector comprising incoming paths respectively connected to the ring bus and the short-cut bus and an outgoing path connected to the ring bus.

18. The bus system of claim 17, wherein the fan-out connector outputs received data to one of the ring bus and the short-cut bus, in response to a control signal received from the arbiter.

19. The system-on-chip of claim 17, wherein the merge connector receives data from one of the ring bus and the short-cut bus and outputs the data to the ring bus, in response to a control signal received from the arbiter.

20. A method of selecting a path through which data is transmitted from one functional block to another functional block in a bus system including a plurality of functional blocks, a ring bus comprising a plurality of nodes, at least one short-cut bus which directly connects one node of the ring bus to another node of the ring bus, a first bus connector which connects a functional block to a node of the ring bus, and a second bus connector which connects a functional block to a node connected to the short-cut bus, the method comprising the steps of:

(a) synthesizing the bus system;
(b) laying out the bus system;
(c) simulating a case where the short-cut bus is used when data is transmitted from each of the functional blocks to another functional block and a case where the short-cut bus is not used and selecting one case based on the result of simulation; and
(d) loading a bus selection table, which is obtained in step (c) to be referred to for selection of a bus, into the arbiter.

21. A data processing system comprising a plurality of circuits (2), a ring bus having plurality of nodes (1, 5, 6) connected to respective ones of said circuits (2) and an arbiter (3) for granting access to the bus to said circuits (2) in response to access requests (REQUEST) therefrom, **characterised in that** each node (1, 5, 6) includes multiplexer means (11, 51, 61) having first and second data inputs connected to receive data from an immediately preceding node (1, 5, 6) of the ring bus and the associated circuit respectively, an output for transmitting data to an immediately succeeding node (1, 5, 6) and a control input connected to receive a control signal (GRANT) from the arbiter (3), and the arbiter (3) is responsive to a request (REQUEST) for bus access by placing the control signal (GRANT) to the multiplexer means (11, 51, 61) of the node (1, 5, 6), associated with the source of the request, in a GRANT state which causes said multiplexer means (1, 5, 6) to select its second input.

22. A system according to claim 21, wherein the ring bus is a chordal ring bus.

23. A system according to claim 22, wherein a first node (5) includes demultiplexer means (51) for selectively routing data over a shortcut link and a second node (6) includes multiplexer means (61) for selectively outputting data from said shortcut link to an immediately succeeding node (1, 5, 6), said demultiplexer (51) and multiplexer means (61) having control inputs connected to the arbitrator (3).

24. A system according to claim 23, wherein the arbitrator (3) includes a table indicating whether said shortcut is to be used for the various possible node (1, 5, 6) to node (1, 5, 6) transmissions and outputs control signals (SELECT) to the demultiplexer means (51) of said first node (5) and the multiplexer means (61) of the second node (6) in dependence on said table in response to an access request (REQUEST) from a circuit (2).

25. A system according to any preceding claim, wherein the ring bus is unidirectional.

26. An integrated circuit including a bus according to any preceding claim.

# FIG. 1

# FIG. 2

EP 1 327 939 A2

# FIG. 3

# FIG. 4

## FIG. 5

## FIG. 6

EP 1 327 939 A2

# FIG. 7

FIG. 8

SHORT
CUT

ARBITER

# FIG. 9

SHORT-CUT BUS

ARBITER

IN OUT GRANT SELECT

REQUEST

IN OUT GRANT

REQUEST

FUNCTIONAL BLOCK

FUNCTIONAL BLOCK

EP 1 327 939 A2

## FIG. 10A

## FIG. 10B

INCOMING PATH

FIRST OUTGOING PATH

SECOND OUTGOING PATH

## FIG. 11A

## FIG. 11B

SELECT

GRANT

FIRST INCOMING PATH

SECOND INCOMING PATH

OUT

OUTGOING PATH

# FIG. 12

## FIG. 13A

## FIG. 13B

| | DESTINATION | | | | | | | | | | |
|---|---|---|---|---|---|---|---|---|---|---|---|
| SOURCE | $F_1$ | $F_2$ | $F_3$ | $F_4$ | $F_5$ | $F_6$ | $F_7$ | $F_8$ | $F_9$ | $F_{10}$ | $F_{11}$ |
| $F_0$ | X | X | X | X | X | X | O | O | O | O | O |

# FIG. 14

(a)

ARBITER

SHORT-CUT BUS

SYNTHESIS →

(b)

ARBITER

SHORT-CUT BUS

BUFFER

↓ LAYOUT

(d)

FIRST SHORT-CUT BUS

SECOND SHORT-CUT BUS

ARBITER

← LOADING OF BUS SELECTION TABLE

(c)

FIRST SHORT-CUT BUS

SECOND SHORT-CUT BUS

ARBITER

EP 1 327 939 A2